Europäisches Patentamt

European Patent Office

Office européen des brevets

(19)

(11) **EP 1 132 194 A1**

(12) ## EUROPEAN PATENT APPLICATION

(43) Date of publication:
**12.09.2001 Bulletin 2001/37**

(51) Int Cl.$^7$: **B29C 70/52**, B29C 47/04

(21) Application number: **01610018.2**

(22) Date of filing: **05.03.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **09.03.2000 US 522353**

(71) Applicant: **ANDERSEN CORPORATION**
**Bayport, Minnesota 55003-1096 (US)**

(72) Inventor: **Puppin, Giuseppe**
**Bayport, Minnesota 55003 (US)**

(74) Representative:
**Plougmann, Vingtoft & Partners A/S**
**Sankt Annae Plads 11,**
**P.O. Box 3007**
**1021 Copenhagen K (DK)**

(54) **Hinged thermoplastic-fabric reinforced structural member, profile and methods therefore**

(57)     Useful hinged, structural members and profiles are disclosed comprising thermoplastic-reinforcing fabric composite materials. The hinged members and profiles (100) have at least two rigid areas of thermoplastic-fabric composite joined on a common fabric through flexible, hinged regions (107). The hinged regions can comprise fabric free of any thermoplastic composite forming material or alternatively can be coated with flexible materials on one or both sides of the fabric. The invention extends to co-extrusion methods wherein thermoplastic materials are applied to pre-determined portions of the fabric (103) under pressure so that the thermoplastic coats (106), and preferably wets, fibers of the reinforcing fabric. The structural members thus extruded are formed into useful lengths and readily converted into complex profiles by simple bending at the hinged regions. In this way, complex profiles that would be difficult to produce by conventional extrusion processes and bulky to ship can be easily made at the job site.

FIG. 1

EP 1 132 194 A1

**Description**

**Field of the Invention**

The invention relates to a composite material comprising a thermoplastic resin and a glass fiber fabric. The composite is configured such that it can be formed into a useful complex profile structural unit through simple manipulation of the glass fiber composite. The resulting structural member can comprise a portion of or the entirety of any structural unit. Preferably the members used in the manufacture, reconstruction or repair of residential or institutional construction. One important use of such structural members is in the manufacture and repair of fenestration units such as windows and doors for residential and commercial architecture. More particularly, the invention relates to improved composite materials and a co-extrusion process that produces structural members that can be readily manipulated to form complex profiles. The composite structures of the invention can be made to manufacture structural components such as any member that finds use in institutional or residential architectural and furniture manufacturing applications.

**Background of the Invention**

Structural materials have been made from composites comprising a resin and a reinforcing material such as a fiber, thread, yarn, roving, fabric or other such fibrous material. Such reinforcement materials have been used in a variety of applications. Conventional window and door manufacturers have commonly used wood and metal components in forming structural members. Commonly, residential windows are manufactured from milled wooden members, glass, screening fabric or extruded aluminum parts that are assembled to form typically double hung or casement units. Conventional glass-wooden windows while structurally sound, useful and well adapted for use in many residential installations, can deteriorate under certain circumstances. Conventional wood windows can also require painting and other periodic maintenance. Wooden and aluminum windows also suffer from cost problems related to the availability of suitable material for construction. Clear wood products are slowly becoming more scarce and are becoming more expensive as demand increases. Metal components are often combined with glass and formed into single unit sliding windows. Metal windows typically suffer from substantial energy loss during winter and summer months. Metal (aluminum and ferrous metals), thermoplastic and wood materials can suffer from deterioration, (i.e.) rust, rot, photochemical deterioration, etc.

Extruded thermoplastic materials have also been used as non-structural components in window and door manufacture. Filled and unfilled thermoplastics have been extruded into useful seals, trim, weather-stripping, coatings and other window construction components. Thermoplastic materials such as polyvinyl chloride have been combined with wood members in manufacturing PERMASHIELD® brand windows manufactured by Andersen Corporation for many years. The technology disclosed in Zanini, U.S. Patent Nos. 2,926,729 and 3,432,883, have been utilized in the manufacturing of plastic coatings or envelopes on wood or other structural members. Generally, the cladding or coating technology used in making PERMASHIELD® windows involves extruding a thin polyvinyl chloride coating or envelope surrounding a wood structural member.

Polyvinyl chloride has been combined with wood fiber to make extruded materials. Such materials have successfully been used in the form of a structural member that is a direct replacement for wood. These extruded materials have sufficient modulus, compressive strength, coefficient of thermal expansion to match wood to produce a direct replacement material. Typical composite materials have achieved a modulus greater than about 500,000 psi, an acceptable CTE, tensile strength, compressive strength, etc. to be useful. Deaner et al., U.S. Patent Nos. 5,406,768 and 5,441,801, U.S. Serial Nos. 08/224,396, 08/224,399, 08/326,472, 08/326,479, 08/326,480, 08/372,101 and 08/326,481 disclose a PVC/wood fiber composite that can be used as a high strength material in a structural member. This PVC/wood fiber composite has utility in many window and door applications.

Kirk-Othmer Encyclopedia of Chemical Technology and other such basic references contain a large proportion of information on the formation of composite materials which are defined as combinations of two or more materials present as separate phases combined to form desired structures. Typically, composites have fiber in some form combined with a continuous resin phase.

Oliveira, U.S. Patent No. 4,110,510 teaches a PVC impregnated mesh having barium sulfate coated chlorinated polyethylene laminated to a sound deadening foam material.

Hutchinson et al., U. S. No. 4,463,046 discloses a dual-durometer integral synthetic hinge joining two relatively rigid synthetic resin sections. The inclusion of reinforcing fibers, rovings, random fiber mats, and/or woven fabrics is not disclosed.

Dost et al., U.S. Patent No. 4,464,432 discloses a process for manufacturing porous textile substrates and teaches a impregnated substrate comprising fabric and a gelled thermoplastic under pressure to impregnate the fabric.

Schock et al., U.S. Patent No. 4,492,063 discloses extruded plastic materials having glass fiber reinforced portions including fiberglass mat or fabric.

Bafford et al., U.S. Patent No. 4,746,565 discloses a flame barrier comprising a face fabric laminated with a glass fabric coated with an encapsulated coating.

Wahl et al., U.S. Patent No. 4,885,205 discloses a fiberglass mat or fabric impregnated with thermoplastic that is roughened or pretreated with a needle.

Amotta, U.S. Patent No. 5,045,377 discloses a composite grid comprising a thermoplastic material is a grid format. The grid components can be reinforced with fiberglass yarn.

Laminates manufactured by inter-layering fiber mat or glass fiber fabric with sheet-like thermoplastic materials have been known. The inter-layered structures are often exposed to elevated temperatures and pressures to form a mechanically stable laminate structure.

The combination of a fiberglass mat or fabric with thermosetting components are disclosed in Biefeld, U.S. Patent No. 2,763,573 and Daray, U.S. Patent No. 5,455,090 and Fennebresque et al., U.S. Patent No. 2,830,925.

A substantial and continuing need exists to provide an improved composite material (using resins or polymers comprising vinyl chloride and polymers having no chloride containing monomer components) that can be made of thermoplastic resin or polymer and a reinforcing fiber component. A further need exists for a composite material that can be extruded into a shape that is a direct substitute for the equivalent structural member milled shape in a wood or metal structural member. A thermoplastic resin having fiber or fabric compatibility, good thermal properties and good structural or mechanical properties is required. This need also extends to a composite with a coefficient of thermal expansion that approximates wood, that can be extruded into reproducible stable dimensions, a high modulus, a high tensile strength, a high compressive strength, a low thermal transmission rate, an improved resistance to insect attack and rot while in use and a hardness and rigidity that permits sawing, milling, and fastening (nail, screw, staple or glue) retention comparable to wood members.

Composite materials that comprise a fiber, fiberglass roving, fiberglass mat or fabric combined with a thermoplastic have been described. One common use of such thermoplastic fiber composites is to make structural members useful in a variety of applications. One type of structural member is a profile. A profile typically is understood to comprise a linear member having structural integrity that has a detailed cross-section. The cross-section in detail renders the profile useful for a variety of structural applications that commonly involve joining or associating a variety of useful members in association with a profile. Proper function of the profile in association with its combined members often requires specific and detailed profile shapes. Such shapes have been made by extruding composite pellets, or by coextruding thermoplastic materials on fibrous mats or fabrics.

In the production of profiles using extrusion methods for making thermoplastic fabric composites, die complexity problems can limit the shape of the extruded profiles. Accordingly, a new extruded product and process for making a hinged profile is needed.

## Brief Discussion of the Invention

A first embodiment of the invention provides a hinged, structural member comprising a thermoplastic-fabric composite. Unlike prior art fabric composites, the hinged member has two or more rigid or semi-fabric areas coated with a rigid thermoplastic. The rigid areas are joined by at least one flexible region that is either uncoated or coated with flexible thermoplastic. The flexible regions are typically linear permitting the rigid areas to rotate relative to each other so that the hinged member can be bent or folded into a complex profile. For consistency and simplicity, "areas" refer to rigid or semi-rigid portions of the fabric coated with rigid thermoplastic, and "regions" refer to the portions of the fabric forming the hinge that either remain uncoated or are coated with flexible thermoplastic. In the structural member, the rigid areas immediately adjacent the hinged regions are substantially co-planer therewith; however, in most applications the rigid areas include bends at pre-determined distances from the hinged regions.

A second embodiment of the invention provides a complex, hollow profile that is formed by bending or folding the structural member into a pre-determined shape. Therefore, the inventive profile differs from the structural member in that upon bending the member to form the profile the rigid areas adjacent the hinged regions become non-co-planer. The pre-determined, geometries envisioned for the inventive profiles can be complex with sharp folds (bend angles) having small radii of curvature. Consequently, the profiles impart a decorative and esthetic look uncommon in the prior art and have utility in architectural and furniture finishing applications. In most, but not necessarily all, profile designs the bend angle $\alpha$ in degrees), radius of curvature **(R)** in mm, and width of the hinged region **(W)** will be related as follows:

$$W = (\alpha\pi R)/180°$$

In both the inventive structural members and profiles, some flexing of the rigid areas is envisioned especially when the rigid areas are large; therefore their designation as semi-rigid is appropriate. However, the radii of curvature of any such extensive flexed areas are much larger than those of the bends and folds contemplated in forming the profiles of the present invention. When bent through the pre-determined bend angle and radius of curvature of the profile, the rigid areas are expected to crack, fracture, or shatter.

Therefore, for purposes of this invention, a rigid thermoplastic is defined as a thermoplastic that fractures upon bending the inventive composite through a pre-determined angle at a specified radius of curvature. Conversely, a flexible thermoplastic is defined as a thermoplastic that does not fracture upon bending the inventive composite through a pre-determined bend angle at a specified radius of curvature.

A third embodiment of the invention provides a co-extrusion process wherein thermoplastic and fabric are combined to form the structural member. The process of the invention comprises introducing a fabric material into an extruder having an extrusion die. In the die, the rigid thermoplastic material is coextruded with the fabric to form at least two rigid fabric- thermoplastic composite areas joined by at least one flexible hinged region. The hinged regions can be fabric regions free of rigid thermoplastic or in alternative embodiments can have flexible thermoplastic co-extruded thereon. Covering the hinged regions with a flexible thermoplastic protects and seals them thus preventing elements of the exterior environment from penetrating the fabric comprising the hinge. The co-extrusion process delivers a hinged, composite, structural member that after extrusion can be folded about the flexible, hinged regions to form a complex, profile.

### Brief Discussion of the Drawings

Figure 1 shows an isometric view of a thermoplastic-fabric composite structure including the hinged region of the invention (as extruded) suitable for forming a complex, hollow profile corresponding to an outside corner profile capable of receiving construction panels.

Figure 2 shows how the extruded structure of Figure 1 can be rotated clockwise through a bend angle (a) of 90 degrees to form a hollow outside corner profile.

Figure 3 shows an isometric view of another thermoplastic-fabric structure including the hinged region of the invention (as extruded) suitable for forming a complex, hollowing profile corresponding to an inside corner profile capable of receiving construction panels.

Figure 4 shows how the extruded structure of Figure 3 can be rotated counter-clockwise through a bend angle (a) of 90 degrees to form a hollow inside corner profile. Figure 5 shows the overall extrusion equipment used to make the resin fabric composite of the invention. FIG. 5 includes a fabric source, a resin source, a combining head, one or more calibration blocks, and a cooling bath.

Figure 6 shows a view of a fabric emerging from a pre-shaping tool in which a flat fabric web is formed into a shape that corresponds in shape to the die in which fabric and resin are combined to produce the structure shown in Figure 1.

Figure 7 and 7A show the front and back surfaces of the forming block useful for initiating folds at the edges of the fabric web for the outside corner profile of Figure 2.

Figure 8 and 8A show the front and back surfaces of the forming block useful for Initiating folds at the edges of the fabric web for the inside corner profile of Figure 4.

### Detailed Description of the Invention

The invention relates to thermoplastic resin and continuous glass fabric composite materials useful in forming hinged structural members that can be folded to yield profiles having complex cross-sections. The members exhibit high quality physical properties because the fabric is intimately contacted and wetted by the resin and organic materials thereby incorporating resin deep within the fabric. The hinged composite members are made by co-extrusion process wherein resin and fabric are combined and formed into a linear extrudate having a pre-determined cross-sectional geometry by means of a shaping die. The cross-section can be any open or closed arbitrary shape depending on the extrusion die geometry. During the extrusion process for the resin/fabric composite, the resin and fabric are intimately contacted at melt temperatures and pressures to insure that the polymeric material flows into and through the fabric preferably displacing trapped air and wetting glass fibers, so that on a microscopic basis, coats and flows into the pores, cavity, etc., of the fabric. Upon exiting the die the continuously extruded members are cut to convenient lengths. The velocity of resin flow into fabric is the sum of the pressure driven (Darcy flow) and capillary (wicking) flows. The relative magnitudes of the two flows and fabric fill time can be estimated using equations (7.3.11-13) as described by Stokes and Evans, *Fundamentals of Interfacial Engineering,* Wiley-VCH, 1997, pp360-374, the disclosure of which is hereby incorporated by reference. The Darcy flow is proportional to the pressure differential and the square of the radius (or width) of the flow channel. Capillary flow is proportional to the surface tension, contact angle, and the first power of the radius of the flow channel. Both flows are inversely proportional to the viscosity of the resin. Therefore, the large interstices in the fabric formed by weave fill rapidly and the flow slows down as it enters and displaces the air trapped in the "pore like" void spaces between individual glass filaments that make up the fiber bundles (often called "rovings") comprising the "yarn" that is woven to produce the glass fabric used to make the inventive composite. The inventive method envisions the use of high pressure co-extrusion processes to deposit thermoplastic onto the fabric surface and into the porous strands suggesting that Darcy flow dominates the fabric and fiber-filling event.

While the surface tension driven capillary flow may be relatively unimportant during the coating process, it is the fiber wetting process that determines the intimacy of the overall fabric-resin bond which in turn determines the strength, impact resistance, and weatherability of the composite. The capillary flow associated with blade coating of glass fabric epoxy pre-preg materials used in printed circuit boards has been estimated by Tait et al. (Shell Patent U. S. Patent No. 5,492,722].

Important Polymer Characteristics

Not every thermoplastic resin is useful in the composite materials of the invention. First the thermoplastic resin must be compatible with the glass fiber. Resins that are not compatible with the glass fiber comprising the reinforcing fabric will not sufficiently penetrate and wet the fabric to the degree necessary to form the intimate bond between thermoplastic and fabric required to obtain the engineering properties characteristic of the inventive composite material.

The composite tensile moduli can be approximated from formulae widely referenced in the art if values for the moduli and volume fractions of the fabric and thermoplastic are known. Such calculated estimates should be confirmed empirically by combining resin and glass fiber at typical melt extrusion temperatures and examining the interface between the polymer material and glass fiber after the composite is cooled. Compatible fibers will form intimate bonds with the glass fabric and will have no void portions where the glass fiber is not contacted by resin. Non-compatible resins can have reduced penetration into the glass fibers or can have insufficient chemical compatibility to adhere to the glass fiber in the fabric. The result of the incompatibility will be the formation of voids and poor wetting of the fibers within the fabric. Good wetting is required because moisture can penetrate along the thermoplastic-fabric interface if voids are present, leading to premature failure of the composite by delamination. Compatible resins will quickly and easily flow into the fabric and wet the glass fiber incorporating the resin into all fabric openings.

Resin to fabric wetting can be increased using a pre-coated fabric. For example, a thin PVC coating can improve wetting thus increasing PVC resin to fabric adhesion. As discussed above, increasing the pressure and decreasing the viscosity of molten resin within the die will speed penetration of resin into fabric weave interstices (where applicable) and fiber bundles thus facilitating formation of a fully combined composite resin fabric material.

To achieve optimum mechanical properties co-extrusion should take place at a processing temperature substantially less than about 450°F (340°C.) preferably between 180 and 240°C. Finally, the tensile moduli of characteristic areas of rigid thermoplastic-fabric composite are greater than about 500,000 psi, preferably greater than 800,000 psi and can attain values of $1.3 \times 10^6$ psi or more.

The flexible thermoplastic polymers used to form the hinge can be coextruded in those predetermined regions of the profile where hinges are desired. Preferably the contemplated flexible thermoplastics optionally used to coat the hinged regions likewise wet, penetrate the fabric, and thermally bond with the surrounding rigid thermoplastic areas during co-extrusion to seal the hinge against penetration by water or noxious atmospheric pollutants such as ozone, various oxides of nitrogen, and windblown particulates. Plasticized PVC is an especially preferred flexible thermoplastic because of its compatibility with the rigid PVC used to form the rigid areas of the inventive profiles.

Vinyl Polymers

A large variety of vinyl polymeric materials can be used in the composite materials of the invention.

A preferred vinyl polymer, a polyvinyl chloride homopolymer, a copolymer of vinyl chloride and a second monomer and a polymeric alloy having at least two vinyl polymers, at least one polymer containing repeating units comprising vinyl chloride.

Polyvinyl chloride is a common commodity thermoplastic polymer. Vinyl chloride monomer is made from a variety of different processes such as the reaction of acetylene and hydrogen chloride and the direct chlorination of ethylene. Polyvinyl chloride is typically manufactured by the free radical polymerization of vinyl chloride resulting in a useful thermoplastic polymer. After polymerization, polyvinyl chloride is commonly combined with thermal stabilizers, lubricants, plasticizers, organic and inorganic pigments, fillers, biocides, processing aids, flame retardants, and other commonly available additive materials. Polyvinyl chloride can also be combined with other vinyl monomers in the manufacture of polyvinyl chloride copolymers. Such copolymers can be linear copolymers, branched copolymers, graft copolymers, random copolymers, regular repeating copolymers, block copolymers, etc. Monomers that can be combined with vinyl chloride to form vinyl chloride copolymers include an acrylonitrile; alpha-olefins such as ethylene, propylene, etc.; chlorinated monomers such as vinylidene dichloride; acrylate monomers such as acrylic acid, methylacrylate, methylmethacrylate, acrylamide, hydroxyethyl acrylate, and others; styrenic monomers such as styrene, alphamethyl styrene, vinyl toluene, etc.; vinyl acetate; and commonly available ethylenically unsaturated monomer compositions.

Such monomers can be used in an amount of up to about 50 mole- %, the balance being vinyl chloride. Polymer blends or polymer alloys can be used. Such alloys typically comprise two miscible polymers blended to form a uniform composition. Scientific and commercial progress in the area of polymer blends has lead to the realization that important physical property improvements cannot be made by developing new polymer material by forming miscible polymer blends or alloys. A polymer alloy at equilibrium comprises a mixture of two amorphous polymers existing as a single phase of intimately mixed segments of the two macro molecular components. Miscible amorphous polymers form glasses upon sufficient cooling and a homogeneous or miscible polymer blend exhibits a single, composition-dependent glass transition temperature ($T_g$). Immiscible or non-alloyed blend of polymers typically displays two or more glass transition temperatures associated with immiscible polymer phases. In the simplest cases, the properties of polymer alloys reflect a composition-weighted average of properties possessed by the components. In general, however, the property dependence on composition varies in a complex way with a particular property, the nature of the components (glassy, rubbery or semi-crystalline), the thermodynamic state of the blend, and its mechanical state whether molecules and phases are oriented. Polyvinyl chloride forms a number of known polymer alloys including, for example, polyvinyl chloride/nitrile rubber; polyvinyl chloride and related chlorinated copolymers and terpolymers of polyvinyl chloride or vinylidene dichloride; polyvinyl chloride/$\alpha$-methyl styrene-acrylonitrile copolymer blends; polyvinyl chloride/polyethylene; polyvinyl chloride/chlorinated polyethylene; and others.

The primary requirement for the substantially thermoplastic polymeric material is that it retain sufficient thermoplastic properties to permit melt blending with optional wood fiber, and to permit the composition material to be extruded or injection molded in a thermoplastic process forming a rigid structural member. Polyvinyl chloride homopolymers, copolymers and polymer alloys are available from a number of manufacturers including B. F. Goodrich, Vista, Air Products, Occidental Chemicals, etc. Preferred polyvinyl chloride materials are polyvinyl chloride homopolymer having a molecular weight (Mn) of about $90,000 \pm 50,000$, most preferably about $88,000 \pm 10,000$. The preferred polyvinyl chloride has a bulk density of approximately $0.71$ gm/cc $\pm 0.1$ gm/cc.

Another class of thermoplastic includes styrenic copolymers. The term styrenic copolymer indicates that styrene is co-polymerized with a second vinyl monomer resulting in a vinyl polymer. Such materials contain at least a 5 mole- % styrene and the balance being 1 or more other vinyl monomers. An important class of these materials is the styrene acrylonitrile (SAN) polymers. SAN polymers are random amorphous linear copolymers produced by co-polymerizing styrene acrylonitrile and optionally other monomers. Emulsion, suspension and continuous mass polymerization techniques have been used. SAN copolymers possess transparency, excellent thermal properties, good chemical resistance and hardness. These polymers are also characterized by their rigidity, dimensional stability and load bearing capability. Olefin modified SAN's (OSA polymer materials) and acrylic styrene acrylonitriles (ASA polymer materials) are known. These materials are somewhat softer than unmodified SAN's and are ductile, opaque, two phased terpolymers that have surprisingly improved weatherability.

ASA resins are random amorphous terpolymers produced either by mass co-polymerization or by graft co-polymerization. In mass co-polymerization, an acrylic monomer styrene and acrylonitrile are combined to form a heteric terpolymer. In an alternative preparation technique, styrene acrylonitrile oligomers and monomers can be grafted to an acrylic elastomer backbone. Such materials are characterized as outdoor weatherable and UV resistant products that provide excellent accommodation of color stability property retention and property stability with exterior exposure. These materials can also be blended or alloyed with a variety of other polymers including polyvinyl chloride, polycarbonate, polymethyl methacrylate and others. An important class of styrene copolymers includes the acrylonitrile-butadiene-styrene monomers. These resins are very versatile family of thermoplastic resins produced by co-polymerizing the three monomers. Each monomer provides an important property to the final terpolymer material. The final material has excellent heat resistance, chemical resistance and surface hardness combined with processability, rigidity and strength. The polymers are also tough and impact resistant. The styrene copolymer family of resins has a melt index that ranges from about 0.5 to 25, preferably about 0.5 to 20.

An important class of resins that can be used in the composites of the invention include acrylic resins. Acrylics comprise a broad array of polymers and copolymers in which the major monomeric constituents are an ester acrylate or methacrylate. These resins are often provided in the form of hard, clear sheet or pellets. Acrylic monomers polymerized by free radical processes initiated by typically peroxides, azo compounds or radiant energy. Commercial polymer formulations are often provided in which a variety of additives are modifiers used during the polymerization provide a specific set of properties for certain applications. Pellets made for resin grade applications are typically made either in bulk (continuous solution polymerization), followed by extrusion and pelletizing or continuously by polymerization in an extruder in which unconverted monomer is removed under reduced pressure and recovered for recycling. Acrylic plastics are commonly made by using methyl acrylate, methylmethacrylate, higher alkyl acrylates and other co-polymerizable vinyl monomers. Preferred acrylic resin materials useful in the composites of the invention has a melt index of about 0.5 to 50, preferably about 1 to 30 gm/10 min.

Vinyl polymer resins include a acrylonitrile; alpha-olefins such as ethylene, propylene, etc.; chlorinated monomers such as vinylidene dichloride, acrylate monomers such as acrylic acid, methylacrylate, methylmethacrylate, acrylamide, hydroxyethyl acrylate, and others; styrenic monomers such as styrene, alphamethyl styrene, vinyl toluene, etc.; vinyl acetate; and other commonly available ethylenically unsaturated monomer compositions.

| RESIN PARAMETERS | | |
|---|---|---|
| | USEFUL | PREFERRED |
| PROCESS TEMPERATURE | T < 250°C | 150° - 210°C |
| FLEX MODULUS* (RESIN Only) | > 200,000 | > 300,000 |

Condensation Polymer Resins

Condensation polymer resins that can be used in the composite materials of the invention include polyamides, polyamide-imide polymers, polyarylsulfones, polycarbonate, polybutylene terephthalate, polybutylene naphthalate, polyetherimides, polyethersulfones, polyethylene terephthalate, thermoplastic polyimides, polyphenylene ether blends, polyphenylene sulfide, polysulfones, thermoplastic polyurethanes and others. Provided the materials can be coextruded at temperatures less than 250°C, preferred condensation resins include polycarbonate materials, polyphenyleneoxide materials, and polyester materials including polyethylene terephthalate, polybutylene terephthalate, polyethylene naphthalate and polybutylene naphthalate materials.

Polycarbonate resins are high performance, amorphous thermoplastic resins having high impact strength, clarity, heat resistance and dimensional stability. Polycarbonates are generally classified as a polyester or carbonic acid with organic hydroxy compounds. The most common polycarbonates are based on phenol A as a hydroxy compound co-polymerized with carbonic acid. Materials are often made by the reaction of a bisphenol A with phosgene ($COCl_2$). Polycarbonates can be made with phthalate monomers introduced into the polymerization extruder to improve properties such as heat resistance, further tri-functional materials can also be used to increase melt strength or extrusion blow molded materials. Polycarbonates can often be used as a versatile blending material as a component with other commercial polymers in the manufacture of alloys. Polycarbonates can be combined with polyethylene terephthalate acrylonitrile-butadiene-styrene resins, styrene maleic anhydride resins and others. Preferred alloys comprise a styrene copolymer and a polycarbonate. Preferred melt for the polycarbonate materials should be indices between 0.5 and 7, preferably between 1 and 5 gms/10 min.

A variety of polyester condensation polymer materials including polyethylene terephthalate, polybutylene terephthalate, polyethylene naphthalate, polybutylene naphthalate, etc. can be useful in the resin glass fabric fiber thermoplastic composites of the invention. Polyethylene terephthalate and polybutylene terephthalate are high performance condensation polymers. Such polymers often made by a co-polymerization between a diol (ethylene glycol, 1,4-butane diol) with dimethyl terephthalate. In the polymerization of the material, the polymerization mixture is heated to high temperature resulting in the transesterification reaction releasing methanol and resulting in the formation of the condensate material. Similarly, polyethylene naphthalate and polybutylene naphthalate materials can be made by co-polymerizing as above using as an acid source, a naphthalene dicarboxylic acid. The naphthalate thermoplastics have a higher $T_g$ and higher stability at high temperature compared to the terephthalate materials. However, all these polyester materials are useful in the composite structural materials of the invention. Such materials have a preferred molecular weight characterized by melt flow properties. Useful polyester materials have a viscosity at 265°C of about 500-2000 cP, preferably about 800-1300 cP.

Polymer blends or polymer alloys can be useful in manufacturing the linear extrudate of the invention. Such alloys typically comprise two miscible polymers blended to form a uniform composition. Scientific and commercial progress in the area of polymer blends has lead to the realization that important physical property improvements can be made not by developing new polymer material but by forming miscible polymer blends or alloys. A polymer alloy at equilibrium comprises a mixture of two amorphous polymers existing as a single phase of intimately mixed segments of the two macro molecular components. Miscible amorphous polymers form glasses upon sufficient cooling and a homogeneous or miscible polymer blend exhibits a single, composition dependent glass transition temperature ($T_g$). Immiscible or non-alloyed blend of polymers typically displays two or more glass transition temperatures associated with immiscible polymer phases. In the simplest cases, the properties of polymer alloys reflect a composition weighted average of properties possessed by the components. In general, however, the property dependence on composition varies in a complex way with a particular property, the nature of the components (glassy, rubbery or semi-crystalline), the thermodynamic state of the blend, and its mechanical state whether molecules and phases are oriented.

The primary requirement for the substantially thermoplastic resin material is that it retain sufficient thermoplastic properties to permit melt blending with glass fabric fiber, permit formation of linear stuctural members, and to permit the composition material to be extruded in a thermoplastic process forming the rigid structural member. Thermoplastic resin and resin alloys are available from a number of manufacturers including B.F. Goodrich, G.E., Dow, and DuPont.

The composite of the invention comprises a woven or non-woven glass fiber fabric, which has preferably been given a protective coating to coat individual glass fibers, yarns, etc. Suitable woven glass fiber fabrics include fabrics having a plain weave, a basket weave, a twill weave, and a crowfoot satin or long shaft satin weave. Suitable knit fabrics include warp knits and weft knits. Non-woven glass fabrics are also suitable but not preferred. The construction of the fabric should not be such that the composite, whether or not prelaminated, precoated or preprocessed, results preventing breakage, splitting or bending of any of the individual glass fibers, past a mechanical yield point, prior to non-woven fabric formation. Fabric weights from about 0.5 to about 10 ounces per square yard are suitable.

The preferred fabric for the purpose of this invention comprises a glass fiber fabric having a PVC, acrylic or acrylate coating. The preferred glass fabric is a plain weave fabric having about 5-20, preferably about 7-12 ounces of fabric per square yard. The fabric typically includes about 10 to 30 bundles of fiber per each square inch (known in the fabric industry as "10-30 pick ") in the fabric here each bundle contains about 40 to about 5,000 glass strands typically 200 to 1000 strands.

Fabrics can be made from individual glass fibers, individual yarns, collections of 2 to greater than 100 individual fibers, tows, yarns or other collections. Further, the fabrics can contain non-glass fibers such as carbon fiber, Kevlar® fiber, metal fibers or other high performance fiber having a tensile strength approximating or greater than that of glass fiber. Such fibers can be included in a glass fiber yarn or tow or can be individually introduced into the woven or non-woven fabric at random in either the warp or weft or both. In the manufacture of non-woven fabrics, the non-woven fabric can be a single layer of randomly distributed glass fiber or yarn or multi-layer laminates of fiber or yarn distribution fabrics. Such non-woven fabrics can also include non-glass fiber incorporated with the glass fiber or between the glass fiber laminations. The glass fiber is preferably coated to encapsulate the glass in a coating. The coating increases the wetability (adjust the surface energy) of the glass fiber to render the materials more compatible or wetable with the synthetic resin or resin blend. Typical coating compositions generally contain a polymeric binder material combined with a filler, a fire retardant additive, a pigment or a plasticizer, or other typical fabric additive material. Typical binders include polymeric materials that can be dissolved or suspended in aqueous diluents including emulsion polymers such as polyvinyl chloride, polyurethane polymers, acrylic materials, ethylene/vinyl chloride copolymers, vinylidene chloride/ alkylmethacrylate copolymers, vinyl chloride/vinylacetate copolymers, neoprene brand (isoprene or chloroprene) polymers, vinylacetate/alkylacrylate copolymers or any known combination thereof. Typical filler materials are commonly inorganic and include clay, calcium carbonate, talc or titanium dioxide. Fire retardant additives include chlorine containing polymers, antimony trioxide, antimony pentaoxide, aluminum trihydrate and decabromodiphenyloxide.

Depending on the selection of polymeric binder, a plasticizer may be incorporated into the composition to maximize flexibility of the coated glass fabric. A wide variety of organic plasticizers are suitable and known for obtaining a flexible coating. A large number of clear plasticizers are known. The coating is commonly applied to the glass fabric as liquid coating or a collapsible foam that can penetrate the glass fiber yarns to ensure that each glass fiber is fully coated. Suitable methods for applying a liquid coating include tank coating, gravure coating, a reverse role coating, knife over roll coating, knife over table coating, floating knife methods, dip coating or pad/nip coating. The coating technique is not critical as long as each glass fiber is substantially coated or encapsulated. The amount of coating applied to the glass fibers can range from about 5 to about 95 wt% based on the coated glass fiber, preferably about 8 to 30 wt% based on the weight of the glass fiber. The coating on the fiber material can comprise one, two or more of a similar or diverse coating. A second or third coating can comprise a primer coating optimizing wetability of the glass fiber by the polymer material. Such primers include organo silanes, organo titanates, polyurethane coatings, etc.

| RESIN/FABRIC COMPOSITE PARAMETERS | | |
|---|---|---|
| | USEFUL | PREFERRED |
| FLEX MODULUS* | > 500,000 | > 700,000 |
| COEFFICIENT OF THERMAL EXPANSION | < 2.5 x $10^{-5}$ in/in-°F | < 1.5 x $10^{-6}$ in/in-°F |
| HEAT DISTORTION TEMPERATURE | T >95°C | T > 105°C |
| IMPACT ENERGY - SINGLE LAYER GLASS COMPOSITE | > 4 in-lb | about 10 to 35 in-lb |

Composite Manufacture

In the manufacture of the composition of the invention, the manufacture and procedure requires two important steps. A first fabric preform step and a second resin/fabric extrusion step.

In a preferred mode, the glass fabric or two or more fabric or glass plies is pre-formed into an appropriate shape prior to combination with the appropriate resin material. We have found that including the pre-form step of pre-shaping the glass fiber to that of a final structural member, facilitates the coextrusion process. Especially when an edge fold is introduced along a lateral edge passes into the coextrusion die. The folded fabric can also have any arbitrary shape. Such a shape can include a simple angle such as a 90° angle, a 135° angle, a 45° angle or other such angle. Further, the preformed shape can be a simple or complex curve having one, two or more diameters. The curves can be convex on one side and concave on that same side. Further, the glass fiber can be formed into a closed surface having a triangular, square, rectangular, circular, oval, hexagonal, heptagonal or other cross-section. The glass fabric can be formed into virtually any arbitrary shape conforming to the end use.

Such shapes can conform to a circular or oval cross-section tube, a rail, a quarter-round, half-round or other shape, a jamb a hollow or filled style, a sill having portions of the linear extrudate shaped to the form of a double hung member, a track shape having a passageway for one, two or more units such as a track for a double hung window, a sliding glass door, etc. The member can comprise stop or sash members or can comprise portions that are non-structural trim elements such as grill, cove, bead, quarter-round, repair pieces, etc. Such a preshaping step is typically accomplished by interposing a shaping member between the source of fabric and the extrusion die that contacts the melt polymer with the glass fabric. Such a shaping die can comprise a simple die which forms the glass fabric into an appropriate shape or can comprise a series of dies that slowly conforms the glass into an appropriate shape for combination with the melt polymer. Such a step wise confirmation of the fabric into the appropriate shape can be done smoothly with a smoothly changing surface that conforms the glass into an appropriate shape. Further, such a preforming step can be done in discrete stages in which the glass fabric passes through two, three or more shaping stages resulting in the formation of a final profile product.

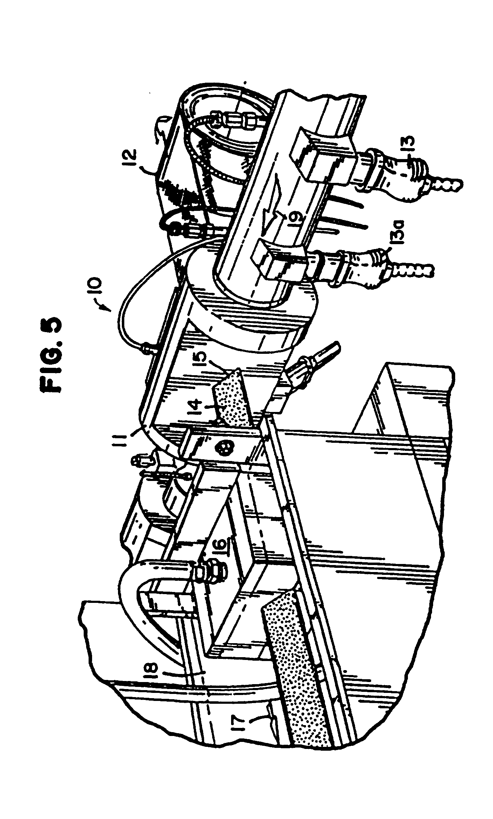

An important pre-forming step with respect to forming a stable useful strong composite involves introducing a fold into an edge on the exposed fiber. We have found fabric, as is common to virtually all fabric, can fray at an edge. This fraying is commonly made worse by application of a flow of resin against the exposed fabric edge disrupting the warp and weft of the fabric. The frayed edges can have randomly oriented fiber and can have fiber removed from the weave resulting in a poorly formed edge with unsatisfactory geometry. Such problems can be solved by introducing a fold into each edge of the fabric. Typically, the edges folded are the lateral edges in the sense that the edges are on the sides of materials as they are incorporated into the extrusion machines. The leading edge and following edges are often not folded during operations, only the lateral edges are exposed to the effects of melt resin. A single fold can be used, however, a double fold or triple fold can be used resulting in a structure having two, three, four or more layers of fabric in the fold. The fold width, measured from the lateral edge of the fold can be approximately 0.1 to 5 centimeters, preferably about 0.2 to 3 centimeters. The folding or pre-forming can be done in one or more stations or steps. We have found that prefolding the fabric prior to the introduction of melt fiber results in a strengthened edge and an edge in which the folded materials, incorporated with resin are strong, resilient and resist mechanical stress. The prefold can be achieved using a pre-forming die that folds the edges over. Such a die can be installed before or after the pre-shaping die shown in Figure 5. Alternatively, the folding and pre-shaping step is done in a single tool.

In the preferred mode, extruders are used to melt and deliver thermoplastic resin to the co-extrusion die wherein fabric and resin are combined to form the inventive composite Suitable extruders can be obtained from a variety of manufacturers including Cincinnati Millicron, Davis-Standard, etc. They are multistage units that control the processing temperature profile as thermoplastic passes through an optional pre-heater, mixing section, a transport section and melt section as is well known in the art. The resin fed to the extruder preferably has a small particle size which is mostly commonly in the form of flake, pellet, powder, etc. Typical resin feed rates are about 60 to about 1400 pounds of material per hour.

In the preferred mode, fabric and polymer are fed to the co-extrusion die at a rate such that the composite can comprise from about 1 to 50 wt% of fabric and 50 to 99 wt% resin. Preferably, about 10 to 20 wt% fabric is combined with 80 to 90 wt% of resin wherein the pre-formed and optionally folded fabric is intimately contacted and combined with molten thermoplastic. Ideally the die is designed so that the melt resin contacts opposite sides of the shaped fabric. However, in some applications this is not possible, and resin is supplied to only one side of the fabric under sufficient pressure to force the melt into and through the fabric resulting in some resin covering all fiber surfaces. Upon exiting the die the continuous linear extrudate forming the inventive hinged, structural member is cut into useful lengths. The cross-section of the member can be any open or closed arbitrary shape depending on the extrusion die geometry.

In summary, we have found that the interaction, on a microscopic level, between the resin and the fabric, in one, two or more layers or plies of fabric, is an important element of the invention. The physical properties of an extruded member are improved when the polymer melt during extrusion of the linear member thoroughly wets and penetrates the fiber in the fabric. The thermoplastic material comprises an exterior continuous organic resin phase covering and intimately associated with reinforcing fiber/fabric. This means, that any pore, crevice, crack, passageway, indentation, etc., in the warp and weft is fully filled by thermoplastic material. Such penetration as attained by ensuring that the viscosity of the resin melt is reduced by operations at elevated temperature and the use of sufficient pressure to force the polymer into the available internal pores in and on the surface of the fiber or fabric. During the linear extrudate manufacture, substantial work is done in providing a uniform introduction of resin into fabric.

**Detailed Discussion of the Drawings**

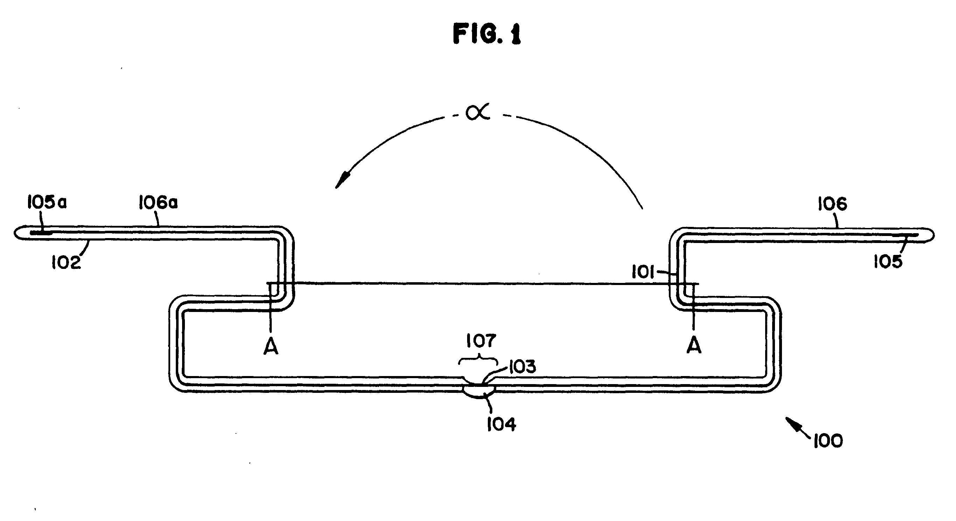

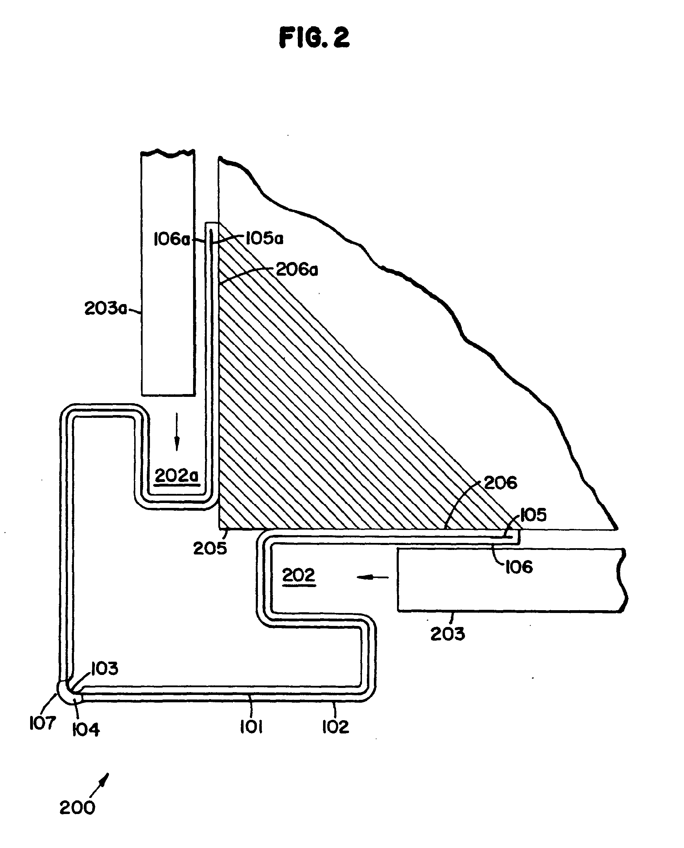

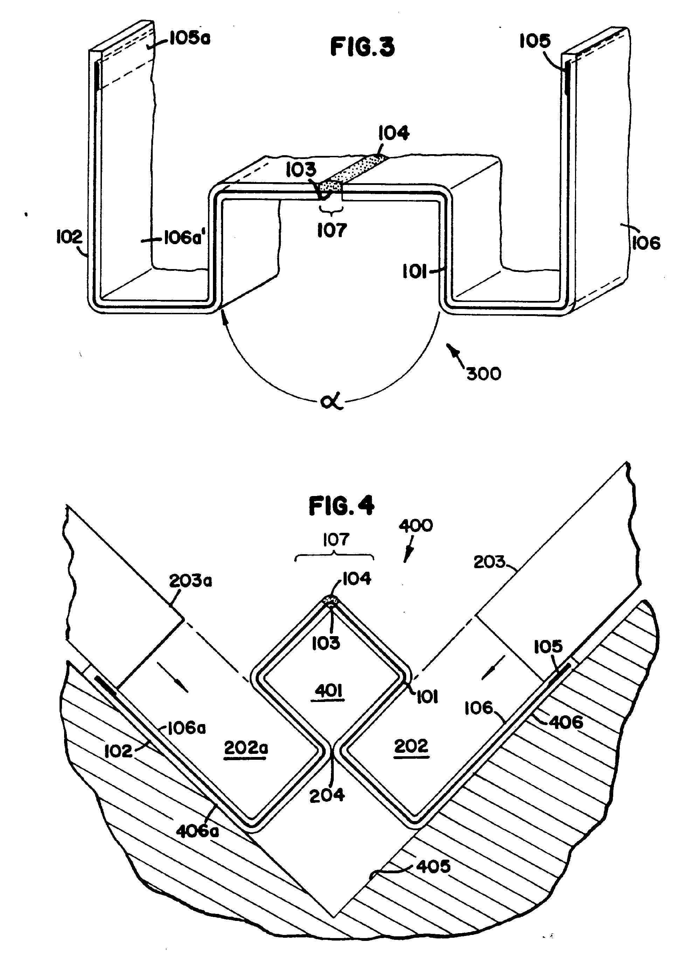

Figure 1 shows a hinged, structural member of the invention (as extruded) suitable for forming an outside corner. The hinge 107 is shown at the center of symmetry. The PVC hinged composite 100 is formed over a fabric 101 that can be a Kevlar, glass, cellulosic or other woven or non-woven fabric. The fabric 101 is formed into a first rigid composite area 106 and a second rigid composite area 106a by coating the fabric 101 with rigid polyvinylchloride 102 to form the composite areas 106 and 106a. At the periphery of the composite areas are folds 105 and 105a introduced into the fabric edge to ensure a smooth, non-raveling, strong composite periphery. The composite areas 106 and 106a are coextruded areas in which the rigid PVC intimately contacts and wets individual fibers in the fabric forming a strong integral composite structure. Between composite areas 106 and 106a is a region 107 comprising fabric 103 free of rigid PVC. Hinge 107 is formed by a substantially linear region separating rigid composite areas 106 and 106a wherein in one embodiment of the invention uncoated flexible fabric joins rigid composite areas 106 and 106a. In another embodiment of the invention, hinged area 107 can be coated on one or both sides with a flexible resinous sealant 104 sealing hinged area 107. Such a sealant is useful in ensuring that the fabric does not permit passage of atmospheric gases, moisture, rain, dust, pollen or other material that can penetrate and disrupt the thermoplastic-fabric bond.
Figure 2 shows how the hinged profile shown in Figure 1 is transformed into a finishing cap for an outside corner by rotating the rigid composite area 106 with respect to composite area 106a in a 90° arc to form finishing cap structure 200 shown in Figure 2. The structure 200 of Figure 2 comprises the co-extrusion formed on the fabric 101 using a coextruded rigid PVC layer 102 forming the composite structure 200. The rigid areas 106 and 106a are rotated with respect to one another about hinge 107 to form the structure 200. Cap structure 200 includes fabric 101, coextruded PVC layer, 102, edge fold 105 that maintains an intact peripheral edge, sealant 104 on the exterior facing side of hinged area 107, and sealant free fabric surface 103 on the interior facing side portion of cap structure 200. As shown, structure 200 exhibits mounting areas 202 and 202a that are adapted for the insertion of a panel 203 or 203a in the assembly of residential or institutional architecture. In this application structure 200 comprises an outside corner profile or assembly device that can be installed over an outside corner 205 for the purpose of providing a finished look after the installation of the panel members 203 and 203a. In such a construction application, the structure 200 is placed over rough corner 205 and rigid composite areas 106 and 106a attached to corresponding outside corner surfaces 206 and 206a using fasteners, adhesives, or heat fusion techniques. Once in place, wall panels 203 or 203a are inserted into the slots 202 or 202a and are fixed in place again using fasteners or adhesive technology.
Figure 3 shows a hinged structural member of the invention (as extruded) suitable for forming an inside corner. The hinge 107 is shown at the center of symmetry. The PVC hinged composite 300 is formed over a fabric 101 that can be a Kevlar, glass, cellulosic or other woven or non-woven fabric. The fabric 101 is formed into a first rigid composite area 106 and a second rigid composite are 106a by coating the fabric 101 with rigid polyvinylchloride 102 to form the composite areas 106 and 106a. At the periphery of the composite area are folds 105 and 105a introduced into the fabric edge to ensure a smooth, non-raveling, strong composite periphery. The composite areas 106 and 106a are coextruded areas in which the rigid PVC intimately contacts and wets individual fibers in the fabric forming a strong integral composite structure. Between composite areas 106 and 106a is a region 107 comprising fabric 103 free of rigid PVC. Hinge 107 is formed by a substantially linear region separating rigid composite areas 106 and 106a wherein in one embodiment of the invention uncoated flexible fabric joins rigid composite areas 106 and 106a. In another embodiment of the invention hinged area 107 can be coated on one or both sides with a flexible resinous sealant 104 sealing hinged area 107. Such a sealant is useful in ensuring that the fabric does not permit passage of atmospheric gases, moisture, rain, dust, pollen or other material that can penetrate and disrupt the thermoplastic-fabric bond.
Figure 4 shows how the hinged profile shown in Figure 3 is transformed into a finishing insert for an inside corner by rotating the rigid composite area 106 with respect to composite area 106a in a 90° arc to form finishing insert structure 400 shown in Figure 4. The structure 400 of Figure 4 comprises the coextrusion formed on the fabric 101 using a coextruded rigid PVC layer 102 forming the composite structure 400. The rigid areas 106 and 106a are rotated with respect to one another about hinge 107 ultimately contacting at an interface 204, which can be fixed by mechanical fasteners, adhesives, heat fusion or other technique to form the structure 400. Insert structure 400 includes fabric 101, coextruded PVC layer, 102, edge fold 105 that maintains an intact peripheral edge, sealant 104 on the exterior facing side of hinged area 107, and sealant free fabric surface 103 on the interior facing side portion 401 of insert structure 400. As shown, structure 400 exhibits mounting areas 202 and 202a that are adapted for the insertion of a panel 203 or 203a in the assembly of residential or institutional architecture. In this application structure 400 comprises an inside corner profile or assembly device that can be inserted into an inside corner 405 for the purpose of providing a finished look after the installation of the panel members 203 and 203a. In such a construction application, the structure 400 is inserted into rough corner 405 and rigid composite areas 106 and 106a attached to corresponding outside corner surfaces 406 and 406a using fasteners, adhesives, or heat fusion techniques. Once in place, wall panels 203 or 203a are inserted into the slots 202 or 202a and are fixed in place using fasteners or adhesive technology.

Process for Making the Hinged Profile of the Invention

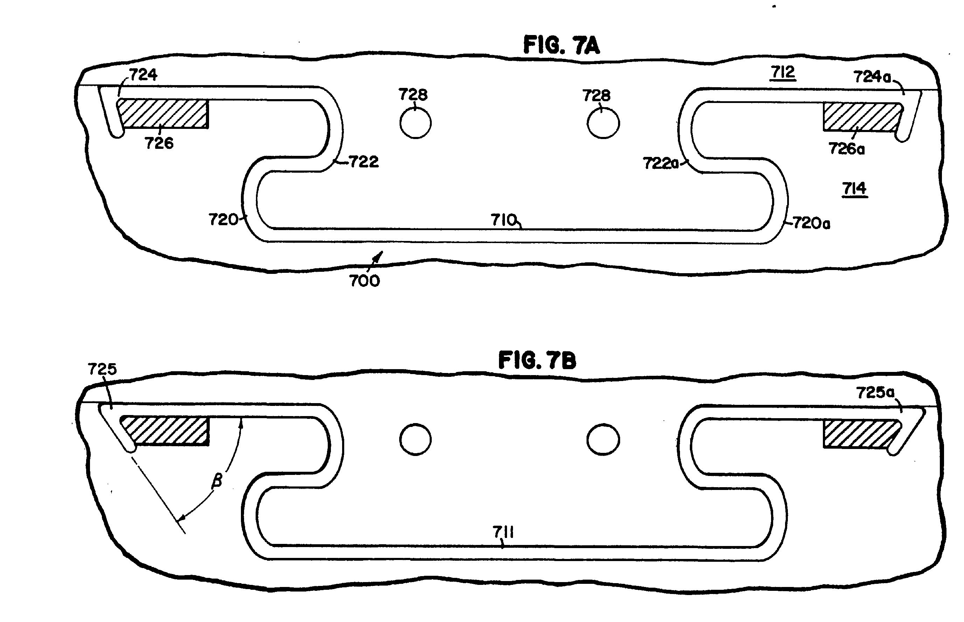

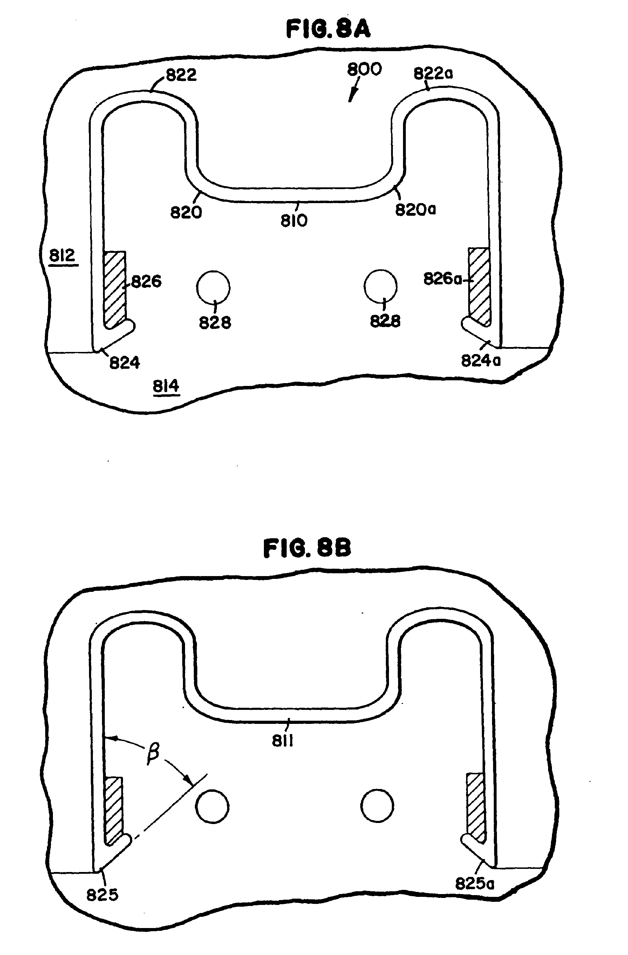

Figure 5 shows an overall apparatus used for forming the resin fabric composite of the invention. The device 10 generally shows a co-extruder head (die) 11 in which fabric and resin are combined under conditions of temperature and pressure sufficient to incorporate the resin into the fabric. Fabric is provided from fabric source 12, typically a rolled cylinder of fabric, and is preformed (shaped or folded) into a desired shape using a pre-forming or folding shaping blocks (examples of which are shown in Figures 7 and 7A and 8 and 8A and described in detail in the discussion thereof). Fabric enters co-extrusion head 11 through a die entry aperture (not shown) wherein it is combined with melt resin and optional flexible polymer used to form hinge 107. Melt resin 19 and flexible polymer is fed to co-extrusion head 11 through heated ports 13 and 13a from extrusion apparatus (extruders) (not shown). In pressurized co-extruder head 11, resin and flexible polymer are applied and combined with pre-determined regions of fabric 12. The hinged composite 14 comprising fabric, hot resin, and flexible hinge exits the die at die exit 15. The surfaces of the fabric are contacted with melt resin and optional flexible polymer in the extruder head on one or both sides from supply channels formed in the extruder device. The dimensions of the die gates contained with the co-extruder head are modified to ensure that every part of the fabric is contacted with appropriate amounts of resin. The peripheral edges typically have greater dimensions to ensure that melt resin can flow and wet the periphery of the fabric. In particular, the folded edges of the fabric require additional resin to fully fill the interstices of the double (multiple) fabric layers of the folded edge. The internal components of the die are not shown. After exiting the die at exit 15, the hot resin fabric composite is directed into a calibration block 16 that ensures the continuous composite profile shape is exact within required tolerances. Such vacuum calibration blocks are commonly available in the industry examples of which are shown in U.S. Patent Nos. 5,468,442 (Brambilla); and 5,316,459 (Melkonian et al.). These blocks reduce the temperature of the composite such that the constant dimensions are maintained as the composite enters a cooling bath 17. The cooling bath is typically filled with water to a level 18. The flow of cooling water in the water bath reduces the temperature of the composite to approximately ambient temperature. Finally, commercial embodiments of the inventive process contemplate using means for continuously monitoring and controlling the tension of the fabric web as it passes through the shaping blocks, co-extrusion coating head (die), calibration blocks and cooling tank, and profile tractor.

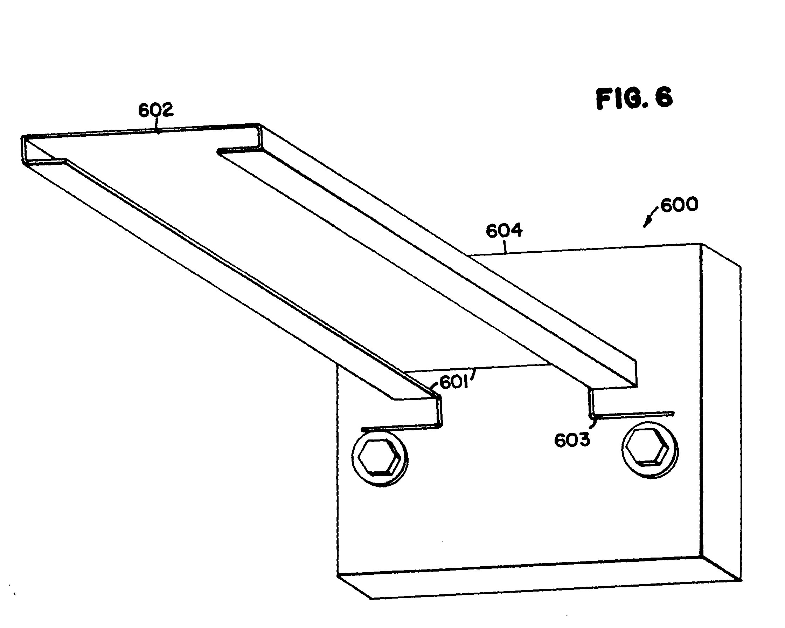

Figure 6 is a view of an apparatus 600 that introduces a desirable shape into the glass fabric prior to combination with the melt resin. To simplify the perspective view of preshaped input glass fabric of outside corner profile of Figure 1 has been truncated along section A-A. FIG. 6 shows the apparatus 600 that introduces the preformed shape 601 into fabric 602. The flat, unshaped input fabric 12 of Figure 5 is fed directly into the apparatus inlet 603 of shaping block 604 where the fabric takes on a shape fixed by the dimensions of the inlet. The inlet 603 is sized in dimension to correspond to the thickness of the fabric leaving less than 0.015 inch clearance upon entry. The forming apparatus 600 contains no introduction ports adapted for melt resin and is merely a pre-shaping apparatus for the fabric. Immediately downstream of the shaping apparatus 600 the pre-formed fabric enters co-extrusion head 11 shown in Figure 5 where pressurized resin and flexible hinge polymer are forced into fabric interstices where it penetrates the fiber bundles and wets individual fibers thus forming the inventive composite.

Figure 7A shows the entrance surface of wooden forming block 700 used in making the outside corner structural member of Figure 1. Fabric from supply roll 12 shown in Figure 5 is drawn through entrance gap 710 the leading edges of which are rounded to prevent "pickout" of fiber bundles through inadvertent contact of the moving fabric web with lip of gap 710. The gap is widened along segments 720, 720a, 722, 722a, 724, and 724a at the points where the pre-determined bends in the planer fabric web are initiated. To further aid in the bending and shaping process, the interior fabric contacting surfaces are tapered through the forming block to gradually begin gently urging the edges of the fabric web inward to form folded edges 105 and 105a as the web passes through the shaping block. The block is made in two halves 712 and 714 which are joined by screws (not shown) to permit ready access to the tapered interior surfaces of the block to facilitate minor adjustment of the contours thereof by filing, sanding, or abrading. Inserts 726 and 726a, held in place by screws (not shown), permit a wider range of adjustment of the subtle geometry at gap termini comprising the fold initiating contact points. The shape, taper, and finish at these initial contact points necessarily interact more subtly with fiber bundles at the fabric edge during fold initiation. Bores 728 are for insertion of mounting bolts shown in Figure 6 are included for the sake of completeness.

Figure 7B shows the exit side of shaping block 700. Gap 711is generally narrower and fold initiating gaps 725 and 725a at gap termini are bent inward more acutely (angle β is more acute) consistent with the inventive fold initiation processes occurring within the shaping block.

Figures 8A and 8B likewise show entrance and exit sides shaping block 800 used to form the hinged inside corner structural member shown in Figures 3 and 4. Included in the figures are contoured gaps 810 and 811, widened gap segments 820, 820a, 822, 822a, 824, and 824a; inserts 826 and 826a; and angle β--components of shaping block 800 which cooperate in the fashion previously described to fold and pre-shape the fabric to form the interior corner structural member of Figures 3 and 4. For the sake of completeness, block halves 812 and 814 and bores 828 are also shown. Gap 811is generally narrower and fold initiating gaps 825 and 825a at gap termini are bent inward more acutely (angle β is more acute) consistent with the inventive fold initiation processes occurring within the shaping block.

The prototype shaping blocks shown in Figures 7A, 7B, 8A, 8B are made of wood. However, shaping blocks made of metal (for example, steel, aluminum, copper, brass, or bronze) or ceramic are contemplated as falling within the scope of the present invention. The choice of material for the blocks is somewhat dependent upon the mechanical properties of the fabric selected. For example, a fabric comprising ceramic fibers may require use of ceramic shaping block.

The following description applies to profiles which combine a single thermoplastic material with the fabric to form the composite. The flow of fabric through the co-extrusion die is typically at an angle to the lineal axis of the extruder, typically at an angle of 90 degrees to the lineal axis of extrusion. Fabric enters a pre-forming area where the fabric is folded and shaped prior to the addition of thermoplastic material. The fabric then enters the extrusion die. The extruder uses standard thermoplastic materials as used in thermoplastic extrusion. These materials are melted and forced into the die under pressure. The pressures upon entering the tool can vary from 1500 to 8000 psi depending upon the thermoplastic used. For the PVC compounds typically used in experiments, the material was PVC with pressures ranging from 3800 to 5600 psi, and normally measuring 4200 psi upon gate entry. The melted thermoplastic flows through a runner system and into the various segments of the die which are arranged to form the pre-determined profile shape. It is in this area where the thermoplastic and fabric come into intimate contact under high pressure. It has been found that the pressure must be sufficiently high to initiate pore-filling Darcy flows described hereinabove or the composite formed will not have adequate adhesion between the layers, which can result in poor physical properties (shrink, CTE and elastic modulus) and delamination. As the thermoplastic begins to solidify and the composite exits the die a standard extrusion puller is programmed to maintain the required degree of tension on the fabric. After exit from the extrusion die, the composite member enters a vacuum calibrator system. The purpose of the calibrator is to impart the proper finish and maintain the shape of the member during cooling. The calibrator can be totally or partially immersed in water or air cooled. As the member is pulled through the calibrator, the composite cools and contracts to assume its pre-determined geometry. The above description also applies to extruding two thermoplastics and fabric. Two extruders inject thermoplastic from opposite side of the die and the runner system determines which side(s) of the member the various materials are applied to in forming the composite. Additional extruders may be added in a similar fashion as warranted by the geometry of the member being extruded. The following example structural members were co-extruded to further illustrate embodiments of the invention disclosed in detail hereinabove. The following information illustrates the typical production conditions and compositions and properties of a structural member made from the resin and fabric.

Sample Preparation

A laboratory scale single screw, 21:1 (L/D) ratio, Davis-Standard extruders are used to prepare samples of the resin fabric composite (Fiber-mat). The resin and flexible polymer are combined in the extruder head with fabric (11 to 19% of fabric by weight based on fabric plus resin). The resin used is GEON 427 series, and the flexible polymer used is GEON E2001 or GEON 83794, which are available from GEON Company; Cleveland OH 44131. To assist processability an additive package is added at 1.5-2 phr (parts per hundred parts of resin) to the resin feed. The additive package includes heat stabilizer and lubricants. More specifically the additives include: optionally 15 parts titanium dioxide, about 2 parts ethylene bis-stearamide wax, about 1.5 parts calcium stearate, optionally about 7.5 parts Rohm & Haas 820-T acrylic resin impact modifier/process aid, and about 2 parts of dimethyl tin thioglycolate. The resin blend and flexible polymer are fed to their respective extruders using volumetric or more preferably loss-in-weight feeders. Feed rates are adjusted to provide a smooth, continuous flow of materials within the co-extrusion head and pressurized deposition thereof onto pre-determined regions of the fabric.

The extruders are run at the following conditions:

| PARAMETER | SETTING | |
|---|---|---|
| | RESIN BLEND | FLEX. POLYMER |
| Barrel Zone 1 Temp. | 190.degrees. C. | 120 degrees C |
| Barrel Zone 2 Temp. | 190.degrees. C. | 120 degrees C |
| Barrel Zone 2 Temp. | 190.degrees. C. | 120 degrees C |
| Adapter Temp. | 190.degrees. C. | 115 degrees C. |

(continued)

| PARAMETER | SETTING | |
|---|---|---|
| | RESIN BLEND | FLEX. POLYMER |
| Die Temp. | 187.degrees. C. | 187 degrees C |
| Screw Speed | 25 RPM | 3 RPM |
| Puller Rate | 4 feet per min. | 4 feet per min. |

The temperatures, feed rates and the screw speeds are adjusted to accommodate the varying flow characteristics of different polymers. During extrusion, about 4 foot test strips were saved for physical property testing. The resulting PVC/glass fabric hinged profiles had widths of 4-10 inches and the extruded material was cut into pieces of 1 by 12 inches. The material had a single layer of glass fabric with a PVC coating. This material was tested for properties useful in fenestration applications and other applications.

Shrink Rate:

Shrink is the difference between a thermoplastics' original length to the length obtained after thermally shocking the part. The test procedure is as follows: An approximately 12 inch test coupon is cut from a structural member and a ten inch line is scored thereon. It is placed (unsupported) into a water bath at the boiling point of water (at the test location, this is 205°F) for five minutes so that the entire coupon is thermally saturated at 205°F. It is removed from the bath and immediately placed into another water bath at 70°F. The length between the lines is measured and difference in length recorded as a percentage change from the original length.

The above quantity is important in the construction industry because as dark surfaces heat, they may reach temperatures which exceed the heat deflection temperatures of the materials by solar radiation and then cool. These thermal cycles can eventually stress relieve structural members thus distorting a fenestration product formed therefrom. Geon Fiberloc® and GE Valox® 508 materials were tested for shrink. Both materials are thermoplastic resins with a fiber fill. A proprietary blend of PVC was also tested along with the Fiber-mat composite. Results are summarized below.

| Material | Fiberloc® | Valox® | PVC | Fiber-Mat Composite |
|---|---|---|---|---|
| Shrink (%) | 0.38 | 0.08 | 2.3 | 0.21 |

The new Fiber-mat composite material has shrink rate comparable to the thermoplastic, and is a substantial improvement over the PVC compounds which is one of the ingredients used in its construction. Because PVC can be used, the comparative cost is less than many costly materials which cost 4 to 10 times the cost of this composite.

Coefficient of Thermal Expansion (CTE)

Tests per ASTM D696

Coefficient of thermal expansion is the amount the material changes in length per unit length per unit temperature. It does not include the shrink rate effects shown above. Thus when a material is heated and then cooled, it returns to its original length. This quantity is important in design of construction components. Parts using dissimilar materials must not bind, twist or bow as temperatures change or fit, form or function may be affected. Below is a comparison of some typical construction materials used in fenestration products.

| Material | PVC Powders | Wood (Ponderosa Pine lengthwise) | ABS Resins | Aluminum | Fiber-Mat Composite |
|---|---|---|---|---|---|
| CTE (in/in/°F | $3.4-4.0\times10^{-5}$ | $0.3\times10^{-5}$ | $4-7.7\times10^{-5}$ | $1.33\times10^{-5}$ | $1.7\times10^{-5}$ |

Wood and aluminum represent very common fenestration materials. The Fiber-mat composite is more compatible with these materials than either PVC or the ABS based thermoplastics with or without glass fill, PVC or other resins, which have CTE's about two to four times that of the composite. Large differences in CTE can lead to unintentional exposure as one material contracts past the other, increased stresses between parts which may result in cracking, distortion or failure of adhesives between layers of differing materials or failure of assemblies which may lead to other forms of mechanical failure. The improvement of CTE compatibility of wood or aluminum with the composite helps in reducing problems which can be associated with large differences in CTE.

Thermal Cycling

Test coupons were cycled in an immersion air chamber between 180°F and -20°F three times daily. Observed distortion of thermal cycled parts was minimal. Standard PVC parts of the same configuration will shrink, warp, bow and twist. Observations made using thermal cycle tests agree with the data, observations and analysis described above.

Impact

Test method ASTM D256

| Material | PVC (high impact) | Wood (Ponderosa Pine lengthwise) | ABS Resins | Fiber-Mat Composite |
|---|---|---|---|---|
| Impact (ft-lb./ inch-notch) | 10-30 | N/A | 1-8 | 10-30 |

| Mechanical Property (ASTM D790) | PVC Powders | Wood (Ponderosa Pine lengthwise) | ABS Resins | Fiber-Mat Composite |
|---|---|---|---|---|
| Modulus of Elasticity (KPSI) | 300 | 997 | 1500 | 830 |
| Modulus of Rupture (KPSI) | 6.4 | 5.1 | 27 | 14 |
| Elongation at Yield (%) | | N/A | 2 | 2.8 |

Typical test data have a standard deviations lying within 12% of their mean values, which show the thermoplastic/glass fabric composite of the invention to be a superior material in applications such as building components especially fenestration units.

The above specification test data and examples provide a basis for understanding the means and bounds of the invention, however, the invention can have many embodiments which do not depart from the spirit and scope of the invention. The invention is embodied in the Claims hereinafter appended.

**Claims**

1. A hinged, composite structure comprising a rigid thermoplastic coated fabric having at least two pre-determined rigid composite areas, said areas adjoining through at least one flexible hinged region permitting rotation of one rigid area relative to another about the hinged region.

2. The structure of Claim 1, wherein said hinged region comprises a linear region formed between said first and second rigid areas.

3. The structure of Claim 2, wherein said linear region comprises a flexible thermoplastic.

4. The structure of Claim 3, wherein said flexible thermoplastic encloses said fabric, said fabric free of rigid thermoplastic, within said flexible regions.

5. The structure of Claim 1, wherein pre-determined portions of said rigid areas are non-coplanar.

6. The structure of Claim 1, wherein said rigid areas include bends at pre-determined distances from said flexible regions.

**7.** The structure of Claim 1, wherein at least one fabric edge is folded.

**8.** The structure of Claim 7, wherein the width of said folded edges is less than 5 centimeters.

**9.** The structure of Claim 1, wherein said rigid areas have properties comprising:

    (a) a modulus of elasticity of about 830 kpsi or greater;
    (b) a coefficient of thermal expansion of about 0.000022 in/in/°F or less;
    (c) a shrinkage not exceeding about 0.28%; and
    (d) an impact of about 10 in-lbs or greater.

**10.** The structure of Claim 9, wherein the standard deviations of each listed property are within $\pm$ 12% of the mean value.

**11.** The structure of Claim 1 wherein the ratio of resin to fabric of said first and second rigid areas comprises about 5 to 50 parts by weight of fabric and about 50 to 95 parts of resin per each 100 parts of composite by weight.

**12.** The structure of Claim 1, wherein said fabric is a woven fabric.

**13.** The structure of Claim 1, wherein said fabric is a non-woven fabric.

**14.** The structure of Claim 13, wherein said fabric is a glass fiber containing fabric.

**15.** The structure of Claim 14, wherein said first and second rigid areas comprise about 70 to 90 parts by weight thermoplastic resin and about 10 to 30 parts by weight glass fabric.

**16.** The structure of Claim 14, wherein said glass fabric comprises a plain weave fabric comprising about 5-20 ounces of fabric per square yard.

**17.** The structure of Claim 14, wherein said fabric is a 5-15 pick fabric.

**18.** The method of Claim 14 wherein said glass fabric further comprises a surface coating on said glass fiber.

**19.** The structure of Claim 18 wherein said surface coating comprises a PVC coating.

**20.** The structure of Claim 1, wherein said fabric is a polyamide fiber containing fabric.

**21.** The structure of Claim 1, wherein said fabric is a cellulosic fiber containing fabric.

**22.** The structure of Claim 1, wherein said thermoplastic comprises polyvinylchloride.

**23.** The structure of Claim 1, wherein said thermoplastic comprises polyolefin.

**24.** The structure of Claim 1, wherein said thermoplastic comprises polyester.

**25.** A hinged profile comprising:

    (a) a rigid thermoplastic coated flexible fabric having at least two pre-determined, non-coplaner rigid composite areas, and

    (b) at least one flexible hinged region joining said rigid areas.

**26.** The profile of Claim 25, wherein said rigid areas include bends at pre-determined distances from said flexible, hinged regions.

**27.** The profile of Claim 25, wherein pre-determined portions of said rigid areas are non-coplaner.

**28.** The profile of Claim 25, wherein said hinged regions comprise linear regions formed between said rigid areas.

29. The profile of Claim 25, wherein said linear, hinged regions comprise flexible thermoplastic.

30. The profile of Claim 29, wherein said linear, hinged regions are enclosed by flexible thermoplastic.

31. The profile of Claim 25, wherein at least one fabric edge is folded.

32. The profile of Claim 31, wherein said folded edges have widths less than 5 centimeters.

33. The profile of Claim 25, wherein the width of the hinged region (W) is related to bend angle $\alpha$ (in degrees), and radius of curvature (R) by the equation:

$$W = (\alpha\pi R)/180°$$

34. The profile of Claim 25, wherein said rigid composite areas have properties comprising:

  (a) a modulus of elasticity of about 830 kpsi or greater;
  (b) a coefficient of thermal expansion of about 0.000022 in/in/°F or less;
  (c) a shrinkage not exceeding about 0.28%; and
  (d) an impact of about 10 in-lbs or greater.

35. The profile of Claim 34, wherein the standard deviations of each listed property are within ± 12% of the mean values.

36. The profile of Claim 25 wherein the ratio of resin to fiber of said first and second rigid areas comprises about 5 to 50 parts by weight of fabric and about 50 to 95 parts of resin per each 100 parts of composite by weight.

37. The profile of Claim 25, wherein said profile comprises a sill, a jamb, a track, or a sash.

38. The profile of Claim 25, wherein said profile comprises a hollow trim profile.

39. An exterior corner profile adapted to receive construction panels by rotating said first and second rigid areas of the structure of Claim 1 shown in Figure 1 through a clockwise bend angle of 90 degrees.

40. An interior corner profile adapted to receive construction panels by rotating said first and second rigid areas of the structure of Claim 1 shown in Figure 3 through a counter-clockwise bend angle of 90 degrees.

41. A method for making a hinged composite structure, said structure including a rigid thermoplastic-fabric composite comprising:

  (a) introducing fabric to the interior of an extrusion die,
  (b) extruding rigid thermoplastic onto at least two pre-determined areas of said fabric,
  (c) coating said pre-determined areas with rigid thermoplastic to create a composite,

  wherein said pre-determined areas are separated by a linear flexible hinged region free of thermoplastic.

42. The method of Claim 41, further comprising the step of extruding flexible thermoplastic upon said hinged region.

43. The method of Claim 41, wherein the process additionally comprises a folding step in which at least one fabric edge is folded prior to combination with said thermoplastic.

44. The method of Claim 41, further comprising drawing composite through a shaping die following said coating step wherein pre-determined portions of said first and second rigid areas are made non-coplaner.

45. A method for making a hinged, composite structure comprising a thermoplastic coated glass fabric, the method comprising:

  (a) introducing the glass fabric into a shaping station including a shaping block to produce a pre-formed fabric shape conforming to the shape of said hinged composite;

(b) introducing at least one rigid thermoplastic into a co-extruder having inlet zones and combining zones wherein the thermoplastic(s) and preformed shaped fabric are combined to form said composite structure under conditions of sufficient pressure, temperature and shear to cause the polymer composition to penetrate and wet individual glass fibers to the extent that the polymer composition substantially coats the glass fibers in said glass fabric; and

(c) extruding the thermoplastic-fabric composite through a shaping die to form said structure wherein the properties of said rigid areas comprise:

(i) a modulus of elasticity of about 830 kpsi or greater;
(ii) a coefficient of thermal expansion of about 0.000022 in/in/°F or less;
(iii) a shrinkage not exceeding about 0.28%; and
(iv) an impact of about 10 in-lbs or greater.

46. The method of Claim 45, further comprising the step of coating said hinged regions with flexible thermoplastic.

47. The method of Claim 45, further comprising a folding step wherein a shaping block introduces at least one edge fold in said fabric.

48. The method of Claim 45 further comprising the step of co-extruding flexible thermoplastic upon said hinged regions of said fabric under temperature and pressure conditions sufficient to bond flexible thermoplastic to the surfaces of said hinged regions.

49. The method of Claim 48, wherein the fabric of said hinged region is entirely incorporated within said flexible thermoplastic.

50. The method of Claim 45, further comprising the step of passing said fabric through a shaping block wherein the exterior edges of said fabric are folded inward prior to introducing fabric into said extrusion die.

51. A method for making a hinged profile comprising:

(a) introducing a fabric to the interior of an extrusion die,
(b) extruding rigid thermoplastic such that at least two pre-determined rigid areas of thermoplastic coated fabric composite are created, wherein said pre-determined rigid areas are separated by at least one flexible hinged region free of thermoplastic,
(c) removing composite from said extrusion die,
(d) cooling said composite,
(e) rotating said rigid areas relative each other about said hinged regions to form said profile.

52. The method of Claim 51, further comprising the step of co-extruding flexible thermoplastic upon said hinged fabric regions.

53. The method of Claim 52, wherein said hinged regions are entirely incorporated within said flexible thermoplastic.

54. The method of Claim 51, further comprising the step of passing said fabric through a shaping block wherein at least one exterior fabric edge is folded inward prior to entry into said extrusion die.

**FIG. 1**

EP 1 132 194 A1

# FIG. 2

FIG.3

FIG.4

FIG. 5

FIG. 6

EP 1 132 194 A1

FIG. 7A

FIG. 7B

23

## FIG. 8A

## FIG. 8B

**European Patent Office**

## EUROPEAN SEARCH REPORT

Application Number

EP 01 61 0018

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 17 04 377 A (VER DEUTSCHE METALLWERKE AG) 9 June 1971 (1971-06-09)<br><br>* page 4, line 5 - page 5, paragraph 2; figure 3 * | 1,2,5,6,<br>9-11,13,<br>20-24 | B29C70/52<br>B29C47/04 |
| X | FR 2 552 018 A (DELANNOY FRANCOIS) 22 March 1985 (1985-03-22)<br><br>* page 3, line 6 - line 8; claims 1-3,5; figure 2 * | 1,2,<br>9-13,<br>20-24 | |
| A | US 4 769 199 A (BEMIS PETER F ET AL) 6 September 1988 (1988-09-06)<br>* the whole document * | 25-54 | |

TECHNICAL FIELDS
SEARCHED        (Int.Cl.7)

B29C

The present search report has been drawn up for all claims

| Place of search | Date of completion of the search | Examiner |
|---|---|---|
| THE HAGUE | 3 July 2001 | Van Wallene, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 01 61 0018

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2001

| Patent document cited in search report | | | Publication date | Patent family member(s) | Publication date |
|---|---|---|---|---|---|
| DE 1704377 | A | | 09-06-1971 | NONE | |
| FR 2552018 | A | | 22-03-1985 | NONE | |
| US 4769199 | A | | 06-09-1988 | NONE | |

EPO FORM P0459

For more details about this annex : see Official Journal of the European Patent Office, No. 12/82